# EUROPÄISCHE PATENTSCHRIFT

(11) **EP 1 419 333 B1**
(45) Veröffentlichungstag und Bekanntmachung des Hinweises auf die Patenterteilung: **21.06.2006**
(21) Anmeldenummer: 02794766.2
(22) Anmeldetag: 09.08.2002
(51) Int. Cl.: F16K 31/00

(54) **PIEZOELEKTRISCH BETÄTIGTES FLUIDVENTIL**
PIEZOELECTRICALLY ACTUATED FLUID VALVE
SOUPAPE HYDRAULIQUE A COMMANDE PIEZO-ELECTRIQUE

(30) Priorität: 14.08.2001 DE 10138830; 17.12.2001 DE 10161888
(43) Veröffentlichungstag der Anmeldung: 19.05.2004
(73) Patentinhaber: Continental Teves AG & Co. oHG, 60488 Frankfurt am Main (DE)
(72) Erfinder: BAYER, Ronald, 63165 Mühlheim/Main (DE); NEUMANN, Ulrich, 64380 Rossdorf (DE); JUNGBECKER, Johann, 55576 Badenheim (DE); VIEHBÖCK, Ingo, 65510 Idstein (DE); BÖHM, Jürgen, 6558 Oberneisen (DE)
(86) Internationale Anmeldenummer: PCT/EP2002/008952
(87) Internationale Veröffentlichungsnummer: WO 2003/016762

(56) Entgegenhaltungen:
- EP-A- 0 145 859
- EP-A- 0 922 893
- EP-A- 0 961 062
- DE-C- 4 410 153
- US-A- 4 934 401
- US-A- 5 079 472
- US-A- 5 340 081
- US-A- 5 630 440
- US-A- 5 669 416
- US-B1- 6 173 744

## Beschreibung

Die Erfindung betrifft ein piezoelektrisch betätigtes Fluidventil, insbesondere für eine elektronisch regelbare Kraftfahrzeugbremsanlage, nach dem Oberbegriff des Patentanspruchs 1.

Aus der DE 44 10 153 C1 ist ein Fluidventil bekannt. Bei diesem Fluidventil ist ein piezoelektrischer Biegewandler ausschließlich an einem Ende in einem Ventilgehäuse eingespannt, während das freie Ende des Biegewandlers ein Ventilschließglied trägt, das mit einem im Strömungsweg angeordneten Ventilsitz zusammenwirkt. Zur Erhöhung der Verstellkraft des Biegewandlers ist in einem Abstand zur Einspannstelle zusätzlich im Ventilgehäuse eine Abstützstelle vorgesehen. Mit der gewählten Lagerung des Biegewandlers ist eine für hohe hydraulische Drücke erforderliche Verstellkraft nicht zu erreichen. Überdies ermöglicht die gewählte Ausführung des Biegewandlers unter dem Einfluß unterschiedlicher Betriebstemperaturen keine hinreichend exakte Abdichtung des Ventilschließgliedes am Ventilsitz.

Ferner ist jeweils aus US-B-6 173 744, US-A-5 079 472, US-A-4 934 401 und US-A-5 669 416 ein mittels eines Piezoelements betätigbarer Biegewandler für ein Ventil bekannt, der an seinem einen Ende an einem Festlager fixiert ist, während das andere, frei bewegliche Ende des Biegewandlers wenigstens einen Druckanschluss entweder freigibt oder verschließt.

Die US-A-5 630 440 offenbart einen mittels eines Piezoelements betätigbarer Biegewandler für ein Ventil, der an beiden Enden ausschließlich fest im Ventilgehäuse eingespannt ist. Der Biegewandler weist in der Flächenmitte eine an einen Ventildichtsitz anlegbare Kontaktfläche auf, die einen Druckmittelkanal freigibt oder verschließt.

In der EP-A-0 145 859 wird ein kreisförmiger Biegewandler vorgestellt, der an seinem Außenumfang im Ventilgehäuse fixiert ist. Der Biegewandler betätigt piezoelektrisch oder magnetostriktiv einen Stößel, der mittig zum Biegewandler ausgerichtet, eine Zwischenwand des Ventilgehäuses in Richtung eines Ventilkörpers durchdringt. Der Ventilkörper befindet sich in einer Querbohrung, deren Innenwand im Bereich von Durchströmungsöffnungen Ventilsitze aufweist.

Aus der gattungsbildenden EP-A-0 922 893 ist ein Fluidventil bekannt, dessen Schaltelement wie eine Blattfeder gestaltet ist, dessen Enden mit zwei diametral im Ventilgehäuse angeordneten Lagerteilen verbunden sind, wovon ein Lagerteil als Festlager und der andere Lagerteil als Loslager ausgeführt ist. Zwischen dem Loslager und der Innenwand des Ventilgehäuses befindet sich eine Feder, sodass eine Verlängerung bzw. Verkürzung des blattfederförmigen Schaltelements bei der Aktivierung von mit dem Los- und Festlager verbundenen Piezoplatten durch eine Kompression bzw. Expansion der Feder aufgenommen werden kann. Die Piezoplatten sind ein Bestandteil einer ersten Antriebseinheit, welche eine Haltekraft für die zwei möglichen Ventilschaltstellungen des Schaltelements erzeugt, während eine zweite Antriebseinheit in Form einer Magnetanordnung eine in die gewünschte Umschaltrichtung des Schaltelements gerichtete Umschaltkraft erzeugt. Zur Betätigung des Schaltelements bedarf es folglich zweier unterschiedlicher Antriebseinheiten.

Der Erfindung liegt die Aufgabe zugrunde, ein Fluidventil der gattungsbildenden Art derart zu verbessern, daß ein besonders einfach zu betätigendes Piezoventil geschaffen wird, das sich sowohl für den Einsatz als stromlos geschlossenes oder stromlos geöffnetes Fluidventil eignet.

Diese Aufgabe wird erfindungsgemäß für ein Piezoventil der gattungsbildenden Art durch die kennzeichnenden Merkmale des Patentanspruchs 1 gelöst.

Weitere Merkmale, Vorteile und Anwendungsmöglichkeiten der Erfindung werden nachfolgend anhand der Beschreibung mehrerer Ausführungsbeispiele näher erläutert.

Es zeigen:
- Figur 1a: eine Längsansicht eines in Grundstellung geschlossenen piezoelektrischen Fluidventils,
- Figur 1b: das Piezoventil nach Figur 1a in einer Explosionszeichnung,
- Figur 1c: eine Perspektivdarstellung von vier parallel nebeneinander auf einer einzigen Aufnahmeplatte angeordneter Biegewandler für vier Fluidventile der in den Figuren 1a, 1b gezeigten Bauart,
- Figur 2a: eine Längsansicht eines in Grundstellung geöffneten piezoelektrischen Fluidventils,
- Figur 2b: eine Perspektivdarstellung von zwei parallel nebeneinander an einer einzigen Aufnahmeplatte angeordneter Biegewandler für zwei Fluidventile der in der Figur 2a gezeigten Bauart,
- Figur 3: die Einjustierung des in den Figuren 1a, 1b abgebildeten Fluidventils mittels eines Kalibriestempels,
- Figur 4a: die diametrale Anordnung der Fluideventile nach den Figuren la, 2a in einem gemeinsamen Ventilgehäuse,
- Figur 4b: das in der Figur 4a gezeigte Ventilgehäuse in einer rechtwinklig geklappten, im Querschnitt gezeigten Gehäuseansicht zur Aufnahme von acht Fluidventile.

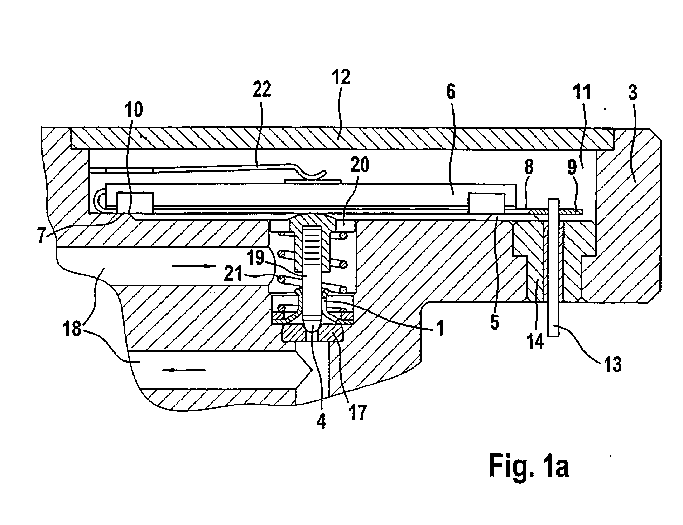

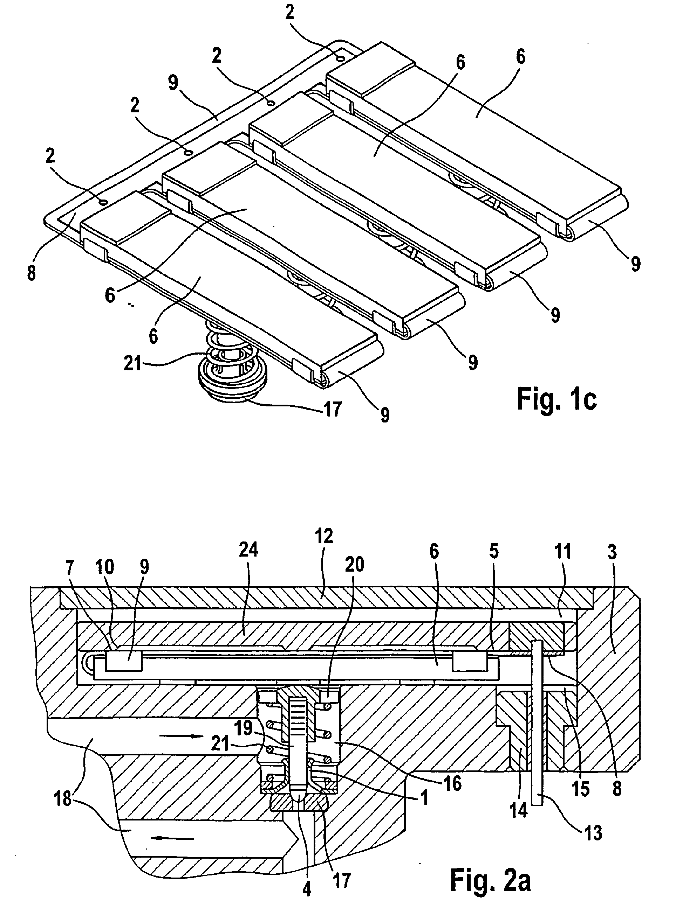

Zunächst werden alle für die vorgenannten Ausführungsbeispiele nach den Figuren 1a bis 4b allgemein verbindlichen Merkmale erläutert.

Die in den Figuren 1a bis 4b abgebildeten Fluidventile kommen bevorzugt in elektronisch regelbaren Kraftfahrzeugbremsanlagen zum Einsatz. Unabhängig davon, ob die abgebildeten Piezoventile als stromlos offene oder stromlos geschlossene Ventile ausgeführt sind, befinden sich die Ventileinzelteile in einem im Wesentlichen blockförmig gestalteten Ventilgehäuse 3, in das seitlich ein Strömungskanal 18 einmündet, der im Bereich des in Grundstellung stromlos offenen Fluidventils entweder mit einem Bremsdruckgeber 27 oder einer Hochdruckenergieversorgung einer Kraftfahrzeugbremsanlage in Verbindung steht. Im Bereich des in Grundstellung stromlos geschlossenen Fluidventils ist ein weiterer Strömungskanal 18 entweder an einem Druckmittelsammler 26, beispielsweise an einen Niederdruckspeicher oder an einen Vorratsbehälter des Bremsdruckgebers 27 angeschlossen. Jeweils entfernt von der Mündungsstelle in das Ventilgehäuse 3 setzt sich der Strömungskanal 18 über die Ventilsitze 17 der stromlos offenen und stromlos geschlossenen Fluidventile in Richtung einer Radbremse 25 fort. Jedes abgebildete Fluidventil verfügt zum Öffnen und Verschließen des Ventilsitzes 17 über ein Ventilschließglied 4, das jeweils von einem im Ventilgehäuse 3 angeordneten, piezoelektrischen Biegewandler 6 betätigt wird, welcher funktionell als beidseitig gelagerter Biegebalken ausgeführt ist. Jeder abgebildete Biegewandler 6 ist jeweils mittels eines Festlagers 5 an einem Ende des Biegebalkens im Ventilgehäuse 3 fixiert. An diesem Ende des Biegebalkens befindet sich auch die elektrische Kontaktierung zur Stromversorgung des Biegewandlers 6.

Um auch unter hohem hydraulischen Druck für jedes abgebildete Fluidventil eine möglichst große auf das Ventilschließglied 4 wirksame Verstellkraft zu erzeugen, weist einerseits jeder Biegewandler 6 an seinem vom Festlager 5 abgewandten zweiten Ende eine weitere Lagerstelle 7 im Ventilgehäuse 3 auf, andererseits muß aber auch das am Biegebalken anliegende Ventilschließglied 4 in einer definierten Teilspannweite zwischen den beiden gelagerten Enden des Biegewandlers 6 angeordnet sein, und zwar vorzugsweise auf halber Spannweite des Biegebalkens, um möglichst effektiv die hohe Verstellkraft des Biegewandlers 6 über das Ventilschließglied 4 auf den Ventilsitz 17 wirksam werden zu lassen. Um die temperaturabhängigen Längenänderungen des Biegewandlers 6 ohne unerwünschte mechanische Verspannungen und ohne negativen Einfluß auf die Ventilbetätigung und die Ventilabdichtung aufnehmen zu können, ist die weitere Lagerstelle des Biegewandlers 6 als Loslager 7 ausgeführt.

Die abgebildeten Biegewandler 6 bestehen aus mehreren piezokeramischen Schichten, die vorzugsweise mit mehreren Trägerschichten zu einem Stapel verklebt sind, die zur elektrischen Aktivierung mit mehreren elektrischen Leiterbahnen 8, die vorzugsweise in Folien- bzw. Dünnfilmtechnik hergestellt sind, verbunden sind, wobei diese Bauteile auf einer dünnwandigen Aufnahmeplatte 9 fixiert sind. Die Aufnahmeplatte 9 stützt sich mit ihrem einen Ende an einer Rampe 10 ab, welche für das stromlos geschlossene Fluidventil an einem Becken 11 des Ventilgehäuses 3, hingegen für das stromlos offene Fluidventil an einer zwischen der Aufnahmeplatte 9 und dem Deckel 12 angeordneten Lagerplatte 24 vorgesehen ist. Die Rampe 10 befindet sich immer innerhalb des Ventilgehäuses 3 im Bereich des Loslagers 7, auf der sich jeweils der Biegewandler 6 zur Aufnahme von Längenänderungen verschiebbar mit seinem vom Festlager 5 abgewandten zweiten Ende 2 abstützt.

Das Festlager 5 jedes Fluidventils befindet sich unmittelbar neben dem steifen elektrischen Kontaktstift 13, der sich durch eine Öffnung 2 in der Aufnahmeplatte 9 zu den Leiterbahnen 8 erstreckt. Der Kontaktstift 13 ist innerhalb eines Glassockels 14 elektrisch isoliert. Der Kontaktstift 13 ist mit dem Glassockel 14 in einer ersten Stufenbohrung 15 des Ventilgehäuses 3 eingesetzt, die mit der Öffnung 2 in der Aufnahmeplatte 9 fluchtet. Parallel neben der ersten Stufenbohrung 15 weist jedes Fluidventil auf halber Spannweite des Biegebalkens eine zweite, vom Strömungskanal 18 durchdrungene Stufenbohrung 16 auf, die das vom Biegewandler 6 betätigbare, auf den Ventilsitz 17 gerichtete Ventilschließglied 4 aufnimmt. Der Biegewandler 6 eines jeden Fluidventils ist in einem Becken 11 des Ventilgehäuses 3 positioniert, das von einem Deckel 12 flüssigkeitsdicht verschlossen ist. Der Boden des Beckens 11 nimmt die beiden Stufenbohrungen 15, 16 auf.

Jedes abgebildete Ventilschließglied 4 ist an einem Ventilstößel 19 angebracht, dessen Stößelkopf 20 unter der Wirkung einer Ventilfeder 21 aus der Stufenbohrung 16 geringfügig hervorsteht und somit innerhalb des Beckens 11 in einer definierten Entfernung zwischen dem Fest- und Loslager 5, 7 von der Ventilfeder 21 gegen den Biegewandler 6 gedrückt ist. Der Ventilstößel 19 ist in Nähe des Ventilschließgliedes 4 mittels einer Führungshülse 1 in Richtung des Ventilsitzes 17 zentriert, die in der zweiten Stufenbohrung 16 jedes Fluidventils koaxial zum Ventilsitz 17 ausgerichtet ist. Am Fuß der Führungshülse 1 stützt sich das vom Stößelkopf 20 abgewandte Ende der Ventilfeder 21 ab.

Losgelöst von den bisher beschriebenen Gemeinsamkeiten der abgebildeten stromlos offenen und stromlos geschlossenen piezoelektrischen Fluidventile werden im Nachfolgenden die Besonderheiten der einzelnen Fluidventile erläutert.

Die Figur 1a zeigt ein in Grundstellung stromlos geschlossenes piezoelektrisches Fluidventil in einer Längsansicht in einem geschnittenen Ventilgehäuse 3 mit den zuvor geschilderten Merkmalen, jedoch mit der Besonderheit, daß zwischen dem Deckel 12 und dem Biegewandler 6 eine Schließfeder 22 angeordnet ist, deren Schließkraft größer als die Öffnungskraft der Ventilfeder 21 bemessen ist, so daß beim Ausbleiben der piezoelektrischen Betätigung die Schließstellung des Ventilschließgliedes 4 am Ventilsitz 17 sichergestellt ist.

Wird an die piezokramischen Schichten des Biegewandlers 6 ein Spannungspotential angelegt, so erfolgt durch die gezielte Verformung der einzelnen Trägerschichten eine Durchbiegung des beidseitig im Ventilgehäuse 3 gelagerten Biegebalkens in Richtung der Schließfeder 22, wobei die Durchbiegung des Biegewandlers 6 den Ventilhub bestimmt. Durch die Wirkung der zwischen dem Ventilsitz 4 und dem Stößelkopf 20 eingespannten Ventilfeder 21 bleibt der Ventilstößel 19 immer in Kontakt mit dem Biegewandler 6, so daß das Ventilschließglied 4 während der Durchbiegung des Biegewandlers 6 die Durchgangsöffnung im Ventilsitz 17 freigibt. In dieser offenen Stellung des normalerweise geschlossenen Fluidventils entweicht Druckmittel der Radbremse 25 über den Strömungskanal 18 in den eingangs erwähnten Druckmittelsammler 26.

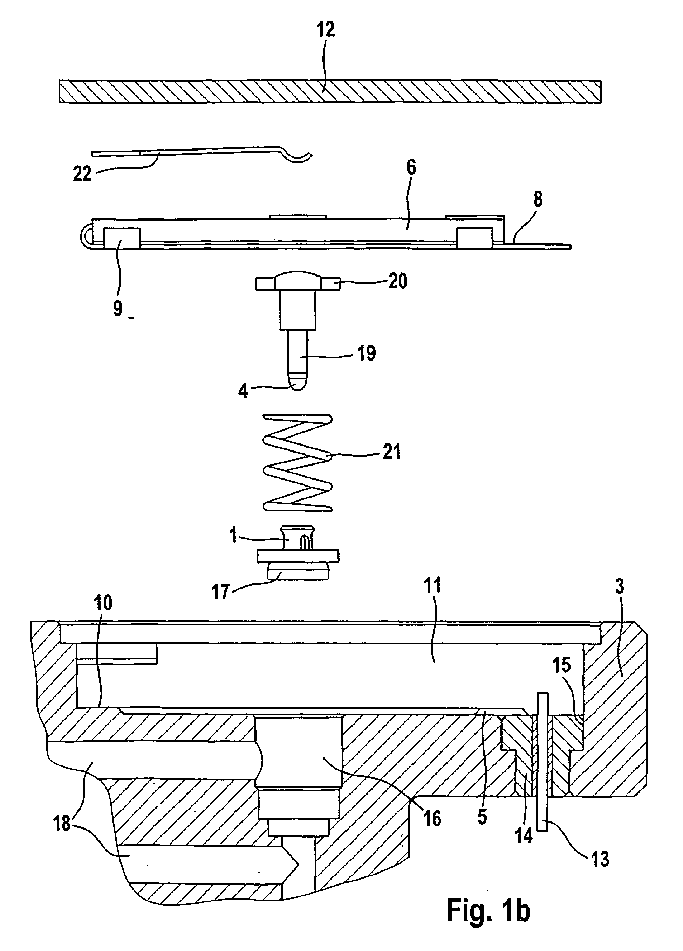

Zur Verdeutlichung der Einzelheiten des Fluidventils nach Figur 1a ist in der Figur 1b das in Grunstellung geschlossene piezoelektrische Fluidventil in einer Explosionszeichnung gemäß der Montagereihenfolge der Einzelteile dargestellt. Sobald nämlich der Glassockel 14 mit dem Kontaktstift 13 in die erste Stufenbohrung 15 des Ventilgehäuses 3 eingesetzt ist, erfolgt das Einpressen des scheibenförmigen Ventilsitzes 17 in die zweite Stufenbohrung 16. Es folgen die Führungshülse 1 und die schraubenförmige Ventilfeder 21, in die der mit dem Ventilschließglied 4 und dem pilzförmigen Stößelkopf 20 versehene Ventilstößel 19 eingeführt wird.

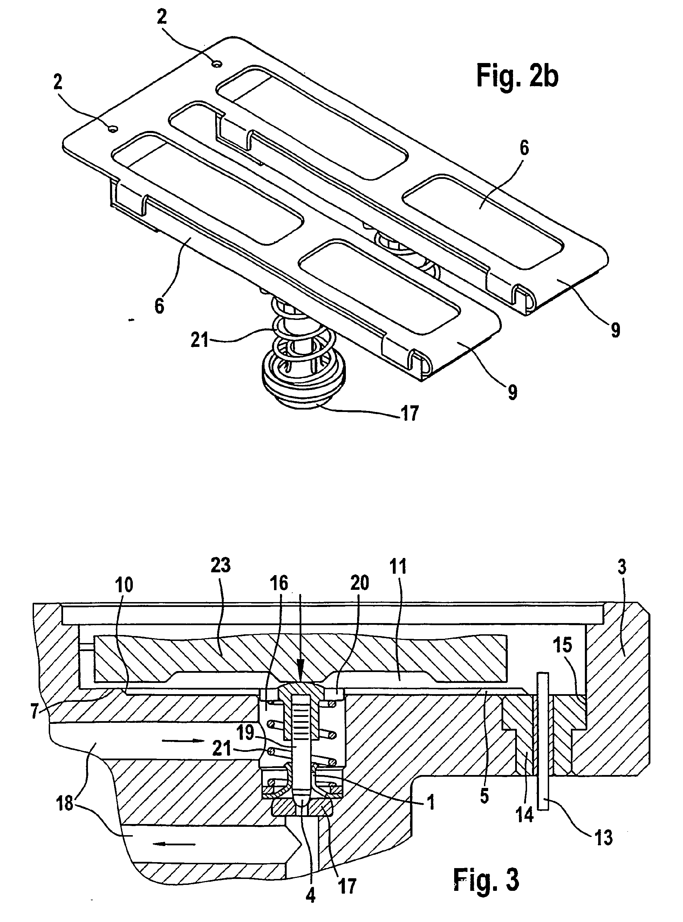

Zur Einjustierung des Ventilschließgliedes 4 und zum Ausgleich von Fertigungtoleranzen ist der Stößelkopf 20 über eine Preßverbindung am Ventilstößel 19 einstellbar, so daß mittels eines Kalibrierstempels 23 der Stößelkopf 20 so weit auf den Ventilstößel 19 aufgepreßt wird, bis der Kalibrierstempel 23 mit seinen Paßflächen am Boden des Beckens 11 aufliegt (siehe Figur 3). Der Kalibriestempel 23 bestimmt somit den Überstand des Stößelkopfs 20 am Boden des Beckens 11, wobei der Überstand dem maximalen Ventilhub entspricht.

Nach dem Entfernen des Kalibrierstempels 23 wird die den Biegewandler 6 tragende Aufnahmeplatte 9 mit dem als Loslager 7 ausgebildeten Ende auf die Rampe 10 und mit dem als Festlager 5 ausgebildeten Ende auf den Kontaktstift 13 aufgesetzt. Gleichzeitig berührt der Stößelkopf 20 entweder die Unterseite der Aufnahmeplatte 9 oder durch ein Fenster in der Aufnahmeplatte 9 die Unterseite des Biegewandlers 6. Auf der Oberseite des Biegewandlers 6 wird fluchtend zur Ventilstößelachse die Schließfeder 22 positioniert. Danach wird das Ventilgehäuse 3 mittels eines in das Becken 11 einzufügenden und zu verschweißenden Deckels 12 flüssigkeitsdicht verschlossen.

Ergänzend zu den Ausführungsformen nach den Figuren 1a und 1b zeigt die Figur 1c eine Perspektivdarstellung von vier parallel nebeneinander auf einer Aufnahmeplatte 9 angeordnete Biegewandlern 6 zur Betätigung von vier stromlos geschlossenen Fluidventilen, die in Reihenanordnung in ein Ventilgehäuse 3 der bereits zuvor erwähnten Art eingefügt werden können. Die Figur 1c verdeutlicht die im Wesentlichen aus vier Zungen bestehende Aufnahmeplatte 9, die zur Fixierung der Biegewandler 6 an den einzelenen Zungenrändern abschnittsweise laschenartig nach oben abgekröpft sind. Der die Funktion des Festlagers 5 übernehmende Endabschnitt an der Aufnahmeplatte 9 ist entsprechend der gewählten Parallelanordnung der Biegewandler 6 stegförmig verbreitert.

In der Figur 2a wird abweichend von den bisherigen Erläuterungen ein stromlos offenes piezoelektrisches Fluidventil in einer Längsansicht gezeigt, dessen Fest- und Loslager 5, 7 nicht am Boden des Beckens 11, sondern an einer Lagerplatte 24 vorgesehen sind, die zwischen dem Deckel 12 und dem Biegewandler 6 in das Becken 11 eingefügt ist. Die übrigen Ventilbauteilen sind identisch mit den aus den Figuren 1a und 1b bekannten Ventilbauteilen. Bei dem in Grundstellung stromlos offenen Fluidventil ist die Wirkrichtung des Biegewandlers 6 entgegengesetzt zur Wirkrichtung des beim stromlos geschlossenen Fluidventil verwendeten Biegewandlers 6, so daß der aus den Figuren 1a und 1b bekannte Biegewandler 6 mit der Aufnahmeplatte 9 lediglich in umgekehrter Einbaulage in das Ventilgehäuse 3 nach Figur 2a einzufügen ist, was schließlich auch zur Verwendung der Lagerplatte 24 führt. Die Lagerplatte 24 ist derart vom Boden des Beckens 11 beabstandet, daß infolge der Wirkung der Ventilfeder 21 das Ventilschließglied 4 in seiner Grundstellung vom Ventilsitz 17 abgehoben ist. In der piezoelektrisch erregten Schaltstellung drückt der Biegewandler 6 proportional zum piezoelektrischen Erregerstrom den Stößelkopf 20 nach unten, wodurch sich das Ventilschließglied 4 in Richtung des Ventilsitzes 17 bewegt. Die aus den Figuren la, 1b bekannte Schließfeder 22 entfällt folglich.

Für das Fluidventil nach Figur 2a erfolgt die Einjustierung des Ventilschließgliedes 17 prinzipiell nach der bereits für das in Grundstellung geschlossene Fluidventil bekannten Maßnahme mittels eines Kalibierstempels 23. Abweichend von der Darstellung nach Figur 3 weist der Kalibrierstempel 23 für das Fluidventil nach Figur 2a lediglich ein vergrößertes Abstandsmaß zwischen dem Boden des Beckens 11 und dem Anschlagpunkt des Stößelkopfs 20 am Kalibriestempel 23 auf, damit das Ventilschließglied 4 in seiner Grundstellung um das gewünschte Öffnungsmaß vom Ventilsitz 17 abgehoben ist.

Die Figur 2b offenbart bezugnehmend auf Figur 2a eine Perspektivansicht der Aufnahmeplatte 9, auf deren Unterseite in Parallelanordnung ein paar Biegewandler 6 eingefaßt sind, die für eine aus zwei stromlos offene Fluidventile bestehende Ventilgruppe verwendet werden. Die beiden über einen Steg im Bereich des Festlagers 5 nebeneinander angeordneten Zungen der Aufnahmeplatte 9 sind mit Ausschnitten versehen, die sowohl auf halber Spannweite als auch an den Enden des Biegewandlers 6 geschlossen sind. Die geschlossenen End- und Mittenabschnitte stützen sich unter Bezug auf die Einbaulage nach Figur 2a an der Lagerplatte 24 .

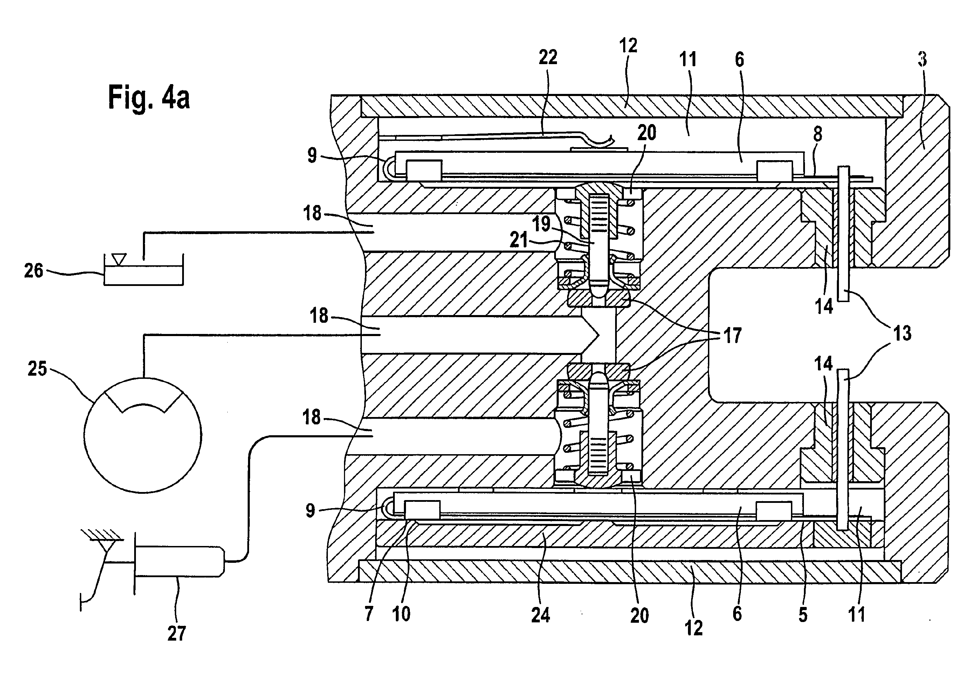

Basierend auf dem paarweisen Zusammenschluß der stromlos offenen Fluidventile nach Figur 2b zeigt die Figur 4a im Längsschnitt durch ein symmetrisch geteiltes Ventilgehäuse 3 eine diametrale Anordnung von piezoelektrisch betätigten, stromlos offenen und stromlos geschlossenen Fluidventile der bereits erläuterten Art. Die Bauteile der stromlos offenen und stromlos geschlossenen Fluidventile sind somit spiegelsymmetrisch zum ersten Abschnitt des mittig im Ventilgehäuse 3 vorgesehenen Strömungskanals 18 gelegen, der unmittelbar an einer Radbremse 25 angeschlossen ist. Dieser erste Abschnitt des Strömungskanals 18 weist zwischen den beiden Ventilsitzen 17 eine Verzweigung in Richtung der beiden diametralen Stufenbohrungen 16 auf. Die Stufenbohrung 16 des stromlos geschlossenen Fluidventils ist über einen zweiten Abschnitt des Strömungskanals 18 mit einem drucklosen Druckmittelsammler 26 verbunden, während die Stufenbohrung 16 des stromlos offenen Fluidventils über einen dritten Abschnitt des Strömungskanals 18 am Bremsdruckgeber 27 angeschlossen ist.

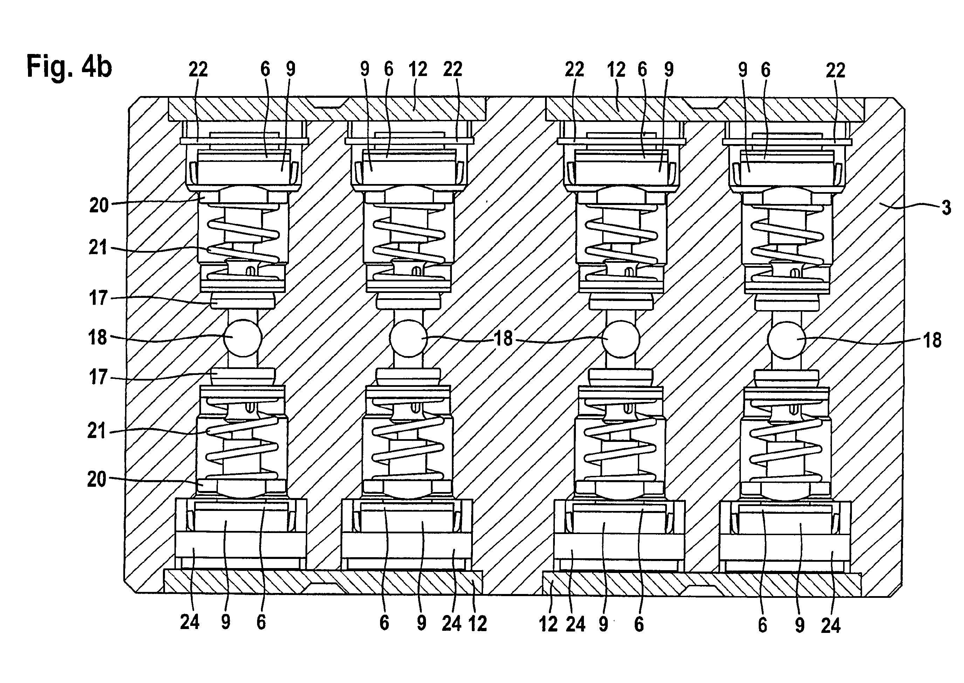

Für eine zweikreisige Kraftfahrzeugbremsanlage mit 4-Kanal-Regelung werden 8 Fluidventile entsprechend der in Figur 4a abgebildeten Ausführung verwendet, so daß sich auf der Grundlage nach Figur 4a eine Ventilanordnung gemäß der Darstellung nach Figur 4b ergibt, in der die stromlos offenen und stromlos geschlossenen Fluidventile beispielhaft einzeln in separaten Becken 11 des blockförmigen Ventilgehäuses 3 angeordnet sind.

### Bezugszeichenliste:

- 1: Führungshülse
- 2: Öffnung
- 3: Ventilgehäuse
- 4: Ventilschließglied
- 5: Festlager
- 6: Biegewandler
- 7: Loslager
- 8: Leiterbahn
- 9: Aufnahmeplatte
- 10: Rampe
- 11: Becken
- 12: Deckel
- 13: Kontaktstift
- 14: Glassockel
- 15: Stufenbohrung
- 16: Stufenbohrung
- 17: Ventilsitz
- 18: Strömungskanal
- 19: Ventilstößel
- 20: Stößelkopf
- 21: Ventilfeder
- 22: Schließfeder
- 23: Kalibriestempel
- 24: Lagerplatte
- 25: Radbremse
- 26: Druckmittelsammler
- 27: Bremsdruckgeber

## Patentansprüche

1. Piezoelektrisch betätigtes Fluidventil, insbesondere für eine elektronisch regelbare Kraftfahrzeugbremsanlage, mit einem Ventilgehäuse (3), in das wenigstens ein Strömungskanal einmündet, an dessen Mündungsstelle ein Ventilsitz (17) vorgesehen ist, dem ein Ventilschließglied (4) zugeordnet ist, das zum Öffnen und Verschließen des Ventilsitzes (17) von einem im Ventilgehäuse (3) angeordneten, piezoelektrischen Biegewandler (6) betätigbar ist, welcher als Biegebalken ausgeführt ist, der mittels eines Festlagers (5) im Bereich seines ersten Endes im Ventilgehäuse (3) fixiert ist, mit einer elektrischen Kontaktierung im Bereich des Festlagers (5) zur Betätigung des Biegewandlers (6), wobei der Biegewandler (6) an seinem vom Festlager (5) abgewandten zweiten Ende eine weitere Lagerstelle (7) aufweist, und wobei das Ventilschließglied (4) in einer definierten Teilspannweite, vorzugsweise auf halber Spannweite, zwischen den beiden Enden des Biegewandlers (6) auf den Ventilsitz (17) gerichtet ist, **dadurch gekennzeichnet, daß** der Biegewandler (6) aus mehreren piezokeramischen Schichten besteht, die mit mehreren Trägerschichten verklebt sind, welche mit mehreren Leiterbahnen (8) auf einer Aufnahmeplatte (9) angeordnet sind, wobei sich die Aufnahmeplatte (9) mit ihrem einen Ende an einer Rampe (10) abstützt, welche an einem Becken (11) des Ventilgehäuses (3) oder an einer in das Becken (11) eingesetzten Lagerplatte (24) vorgesehen ist.

2. Fluidventil nach Anspruch 1, **dadurch gekennzeichnet, daß** die weitere Lagerstelle des Biegewandlers (6) als Loslager (7) ausgeführt ist.

3. Fluidventil nach Anspruch 2, **dadurch gekennzeichnet, daß** im Bereich des Loslagers (7) eine Rampe (10) im Ventilgehäuse (3) angeordnet ist, auf der sich der Biegewandler (6) verschiebbar mit seinem vom Festlager (5) abgewandten zweiten Ende (2) abstützt.

4. Fluidventil nach Anspruch 1, **dadurch gekennzeichnet, daß** das Festlager (5) neben einem im Ventilgehäuse (3) fixierten elektrischen Kontaktstift (13) angeordnet ist, der sich durch eine Öffnung (2) einer Aufnahmeplatte (9) erstreckt, die den Biegewandler (6) und mehrere Leiterbahnen (8) trägt.

5. Fluidventil nach Anspruch 4, **dadurch gekennzeichnet, daß** der Kontaktstift (13) vorzugsweise innerhalb eines Glassockels (14) elektrisch isoliert angeordnet ist, wobei der Kontaktstift (13) vorzugsweise mit dem Glassockel (14) in einer ersten Stufenbohrung (15) des Ventilgehäuses (3) eingesetzt ist, die mit der Öffnung (2) in der Aufnahmeplatte (9) fluchtet.

6. Fluidventil nach Anspruch 5, **dadurch gekennzeichnet, daß** parallel neben der ersten Stufenbohrung (15) eine zweite, vom Strömungskanal (18) durchdrungene Stufenbohrung (16) vorgesehen ist, welche ein vom Biegewandler (6) betätigbares Ventilschließglied (4) aufweist, das in der zweiten Stufenbohrung (16) auf einen Ventilsitz (17) gerichtet ist.

7. Fluidventil nach Anspruch 6, **dadurch gekennzeichnet, daß** der Biegewandler (6) in einem Becken (11) des Ventilgehäuses (3) angeordnet ist, das von einem Deckel (12) flüssigkeitsdicht verschlossen ist, wobei der Boden des Beckens (11) von den beiden Stufenbohrungen (15, 16) durchdrungen ist.

8. Fluidventil nach Anspruch 1, **dadurch gekennzeichnet, daß** das Ventilschließglied (4) an einem Ventilstößel (19) angebracht ist, dessen Stößelkopf (20) unter der Wirkung einer Ventilfeder (21) in einer definierten Entfernung zwischen dem Fest- und Loslager (5, 7) gegen den Biegewandler (6) gedrückt ist, wobei der Ventilstößel (19) in Nähe des Ventilschließgliedes (4) mittels einer Führungshülse (1) gegenüber dem Ventilsitz (17) zentriert ist, an der sich das vom Stößelkopf (20) abgewandte Ende der Ventilfeder (21) abstützt.

9. Fluidventil nach einem der vorhergehenden Ansprüche, **dadurch gekennzeichnet, daß** der Stößelkopf (20) mittels einer Preßverbindung am Ventilstößel (19) längenvariabel einstellbar ist.

10. Fluidventil nach einem der vorhergehenden Ansprüche, **dadurch gekennzeichnet, daß** das Becken (11) weitere, parallel nebeneinander angeordnete Biegewandler, (6) aufnimmt, deren Leiterbahnen (8) über einen in einem einzigen Glassockel (14) angeordneten Kontaktstift (13) kontaktiert sind.

## Claims

1. Piezoelectrically actuated fluid valve, in particular for an electronically controllable motor vehicle brake system, including a valve housing (3) opening into which is at least one flow channel, at whose port a valve seat (17) is provided, associated with which is a valve closure member (4) that is operable by a piezoelectric bending transducer (6) arranged in the valve housing (3) in order to open and close the valve seat (17), said bending transducer being configured as a transverse beam that is fixed in the area of its first end in the valve housing (3) by means of an immovable bearing (5), including an electrical contacting in the area of the immovable bearing (5) for the actuation of the bending transducer (6), and the bending transducer (6) includes an additional bearing point (7) at its second end remote from the immovable bearing (5), and the valve closure member (4) points to the valve seat (17) in a defined partial span width, preferably at half the span width, between the two ends of the bending transducer (6). **characterized in that** the bending transducer (6) is comprised of several piezoceramic layers being cemented with several subbases that are arranged with several conductor paths (8) on an accommodating plate (9), with said accommodating plate (9) being supported with its one end on a ramp (10) that is provided at a pan (11) of the valve housing (3) or at a bearing plate (24) inserted into the pan (11).

2. Fluid valve as claimed in claim 1,
c h a r a c t e r i z e d in that the additional bearing point of the bending transducer (6) is configured as a movable bearing (7).

3. Fluid valve as claimed in claim 2,
c h a r a c t e r i z e d in that in the area of the movable bearing (7), the valve housing (3) accommodates a ramp (10) on which the bending transducer (6) is displaceably supported with its second end (2) remote from the immovable bearing (5).

4. Fluid valve as claimed in claim 1,
c h a r a c t e r i z e d in that the immovable bearing (5) is arranged beside an electrical contact pin (13) that is fixed in the valve housing (3) and extends through an opening (2) in an accommodating plate (9) carrying the bending transducer (6) and several conductor paths (8).

5. Fluid valve as claimed in claim 4,
c h a r a c t e r i z e d in that the contact pin (13) is arranged and electrically insulated preferably within a glass socket (14), with said contact pin (13) being preferably inserted with glass socket (14) into a first stepped bore (15) of the valve housing (3) that is in alignment with the opening (2) in the accommodating plate (9).

6. Fluid valve as claimed in claim 5,
c h a r a c t e r i z e d in that in parallel beside the first stepped bore (15), there is a second stepped bore (16) penetrated by the flow channel (18) and accommodating a valve closure member (4) that is operable by the bending transducer (6) and directed towards a valve seat (17) in the second stepped bore (16).

7. Fluid valve as claimed in claim 6,
c h a r a c t e r i z e d in that the bending transducer (6) is positioned in a pan (11) of the valve housing (3) that is fluid-tightly closed by a cover (12), and the bottom of pan (11) is penetrated by the two stepped bores (15, 16).

8. Fluid valve as claimed in claim 1,
c h a r a c t e r i z e d in that the valve closure member (4) is fitted to a valve tappet (19) whose tappet head (20), by the action of a valve spring (21), is urged against the bending transducer (6) at a defined distance between the immovable and the movable bearing (5, 7), with said valve tappet (19) close to the valve closure member (4) being centered with regard to the valve seat (17) by means of a guiding sleeve (1), at which the end of the valve spring (21) remote from the tappet head (20) is supported.

9. Fluid valve as claimed in any one of the preceding claims, c h a r a c t e r i z e d in that the tappet head (20) is adjustable lengthwise by means of a press fit at the valve tappet (19).

10. Fluid valve as claimed in any one of the preceding claims, c h a r a c t e r i z e d in that the pan (11) accommodates further bending transducers (6) arranged in parallel side by side, whose conductor paths (8) are electrically contacted by way of contact pin (13) arranged in one single glass socket (14).

## Revendications

1. Soupape fluidique à actionnement piézo-électrique, en particulier pour un système de freinage de véhicule automobile à régulation électronique, comportant un boîtier de soupape (3) dans lequel débouche au moins un canal d'écoulement au point d'embouchure duquel est prévu un siège de soupape (17) auquel est associé un obturateur de soupape (4) qui peut être actionné, pour l'ouverture et la fermeture du siège de soupape (17), par un convertisseur à flexion (6) piézo-électrique, disposé dans le boîtier de soupape (3), lequel est réalisé sous la forme d'une barre de flexion qui est fixée dans le boîtier de soupape (3), au moyen d'un palier fixe (5) dans la zone de sa première extrémité, avec une mise en contact électrique dans la zone du palier fixe (5) pour l'actionnement du convertisseur à flexion (6), le convertisseur à flexion (6) comportant, à sa deuxième extrémité tournée à l'opposé du palier (6, 5), un autre point d'appui (7), et l'obturateur de soupape (4) étant dirigé vers le siège de soupape (7), dans une distance entre appuis partielle définie, de préférence à mi-distance, entre les deux extrémités du convertisseur à flexion (6), **caractérisée en ce que** le convertisseur à flexion (6) est constitué de plusieurs couches en piézocéramique qui sont collées avec plusieurs couches de support lesquelles sont disposées avec plusieurs pistes conductrices (8) sur une plaque de réception (9), la plaque de réception (9) prenant appui par l'une de ses extrémités sur une rampe (10) qui est prévue sur une cuvette (11) du boîtier de soupape (3) ou sur une plaque d'appui (24) insérée dans la cuvette (11).

2. Soupape fluidique selon la revendication 1, **caractérisée en ce que** l'autre point d'appui du convertisseur à flexion (6) est réalisé sous la forme d'un palier libre (7).

3. Soupape fluidique selon la revendication 2, **caractérisée en ce que** dans la zone du palier libre (7), il est disposé dans le boîtier de soupape (3) une rampe (10) sur laquelle le convertisseur à flexion (6) prend appui, avec possibilité de coulissement, par sa deuxième extrémité (2) tournée à l'opposé du palier fixe (5).

4. Soupape fluidique selon la revendication 1, **caractérisée en ce que** le palier fixe (5) est disposé à côté d'une broche de contact électrique (13) fixée dans le boîtier de soupape (3), laquelle s'étend à travers une ouverture (2) d'une plaque de réception (9) qui porte le convertisseur à flexion (6) et plusieurs pistes conductrices (8).

5. Soupape fluidique selon la revendication 4, **caractérisée en ce que** la broche de contact (13) est disposée électriquement isolée de préférence à l'intérieur d'un socle en verre (14), la broche de contact (13) étant insérée de préférence avec le socle en verre (14) dans un premier perçage étagé (15) du boîtier de soupape (3), lequel est aligné avec l'ouverture (2) de la plaque de réception (9).

6. Soupape fluidique selon la revendication 5, **caractérisée en ce que** parallèlement et à côté du premier perçage étagé (15) est prévu un deuxième perçage étagé (16) traversé par le canal d'écoulement (18), qui comporte un obturateur de soupape (4) pouvant être actionné par le convertisseur à flexion (6), lequel obturateur est dirigé vers un siège de soupape (17), dans le deuxième perçage étagé (16).

7. Soupape fluidique selon la revendication 6, **caractérisée en ce que** le convertisseur à flexion (6) est disposé dans une cuvette (11) du boîtier de soupape (3), qui est fermée de manière étanche aux liquides par un couvercle (12), le fond de la cuvette (11) étant traversé par les deux perçages étagés (15, 16).

8. Soupape fluidique selon la revendication 1, **caractérisée en ce que** l'obturateur de soupape (4) est placé sur un poussoir de soupape (19) dont la tête de poussoir (20) est pressée, sous l'action d'un ressort de soupape (21), à une distance définie entre le palier fixe et le palier libre (5, 7), contre le convertisseur à flexion (6), le poussoir de soupape (19) étant centré, à proximité de l'obturateur de soupape (4), au moyen d'une douille de guidage (1), par rapport au siège de soupape (17) sur lequel prend appui l'extrémité du ressort de soupape (21), tournée à l'opposé de la tête de poussoir (20).

9. Soupape fluidique selon l'une des revendications précédentes, **caractérisée en ce que** la tête de poussoir (20) peut être réglée de manière variable en longueur au moyen d'une liaison sertie sur le poussoir de soupape (19).

10. Soupape fluidique selon l'une des revendications précédentes, **caractérisée en ce que** la cuvette (11) reçoit d'autres convertisseurs à flexion (6), disposés parallèlement et côte à côte, dont les pistes conductrices (8) sont mises en contact électrique par une broche de contact (13) disposée dans un seul socle en verre (14).
